# EUROPÄISCHE PATENTANMELDUNG

(11) **EP 4 671 725 A1**
(43) Veröffentlichungstag der Anmeldung: **31.12.2025**
(21) Anmeldenummer: 25185437.8
(22) Anmeldetag: 26.06.2025
(51) Int. Cl.: G01M 13/028, G01M 7/02

(54) **VERFAHREN UND VORRICHTUNG ZUR ERFASSUNG DES TORSIONSSCHWINGUNGSVERHALTENS EINES ANTRIEBSSTRANGES IN EINEM LUFTFAHRZEUG**

(30) Priorität: 28.06.2024 DE 102024118443
(71) Anmelder: Rolls-Royce Deutschland Ltd & Co KG, 15827 Blankenfelde-Mahlow (DE)
(72) Erfinder: REEH, Andreas, 15827 Blankenfelde-Mahlow (DE); REINICKE, Gunar, 15827 Blankenfelde-Mahlow (DE)

(57) **Zusammenfassung**

Die Offenbarung betrifft ein Verfahren zur Erfassung des Torsionsschwingungsverhaltens (T) eines Antriebsstranges (1) eines Luftfahrzeugs, insbesondere eines Flugzeugs, wobei der Antriebsstrang (1) mit einem Permanentmagnet-Synchronmotor (20) als Antrieb gekoppelt ist, gekennzeichnet durch
a) mindestens eine Auslösung eines Kurzschlusses (K), insbesondere mindestens eines 2-Phasen-Kurzschlusses (K) und / oder mindestens eines symmetrischen 3-Phasen-Kurzschlusses (K) bei dem im Betrieb (101) befindlichen Permanentmagnet-Synchronmotor (20) zur Aufbringung mindestens einer induzierten mechanischen Anregung (A) des Antriebsstrangs (1), wobei
b) die Torsionsschwingungsantwort (T) des Antriebsstrangs (1) auf die induzierte mechanische Anregung (A), insbesondere zur Ermittlung mindestens einer Eigenfrequenz (f) und / oder einer Resonanzfrequenz des Antriebstrangs (1) mit einer Sensorvorrichtung (30) erfasst wird, insbesondere bei einem Antriebsstrang (1) der im Wesentlichen frei von einer Drehmomentlast ist.

Die Offenbarung betrifft auch eine entsprechende Vorrichtung.

## Beschreibung

Die vorliegende Offenbarung bezieht sich auf ein Verfahren zur Erfassung des Torsionsschwingungsverhaltens eines Antriebsstranges eines Luftfahrzeugs, insbesondere eines Flugzeugs, mit den Merkmalen des Anspruchs 1 und eine Vorrichtung zur Erfassung des Torsionsschwingungsverhaltens eines Antriebsstranges eines Luftfahrzeugs, insbesondere eines Flugzeugs, mit den Merkmalen des Anspruchs 17.

Elektrische Antriebe in einem Luftfahrzeug werden heute zunehmend zum Antrieb von Propellern oder Fans benutzt. Auch werden elektrische Antriebe in Turbogeneratoren oder hybriden Antriebssystemen von Luftfahrzeugen verwendet. Solche Antriebe werden aber nicht nur in Flugzeugen, z.B. für die Urban Mobility, sondern auch in Drohnen oder Luftschiffen eingesetzt.

Gemeinsam ist diesen elektrischen Antrieben, dass sie über Antriebsstränge verfügen, die im Betrieb insbesondere Torsionsschwingungen ausgesetzt sind.

Unter einem Antriebsstrang wird hier die Gesamtheit der Bauelemente verstanden, die vom elektrischen Antrieb in Rotation versetzt werden, insbesondere auch einschließlich rotierender Teile des Antriebs selbst. Dies schließt z.B. Wellen, Wellenteile, angelenkte Wellen, Differentiale, Lager, Getriebe, Kupplungen, angeschlossene Arbeits- und Kraftmaschinen (z.B. Propeller, Rotoren, Fans, Kompressorstufen, Turbinenstufen) und / oder angetriebene Bauelemente ein. Grundsätzlich kann eine solcher Antriebsstrang durch eine Drehschwingerkette, bestehend aus Drehmassen und Koppelungen (über Federn und Dämpfer), modelliert werden.

Dabei zeigen in-situ (d.h. im betriebsfähigen Luftfahrzeug, insbesondere einem Flugzeug) befindliche Antriebsstränge häufig ein anderes Torsionsschwingungsverhalten als Antriebsstränge, die sich z.B. in einer Testvorrichtung befinden. Für eine aussagekräftige Erfassung des Torsionsschwingungsverhaltens, insbesondere von Eigenfrequenzen oder Resonanzfrequenzen, sollten möglichst die Trägheiten, die Steifigkeiten und die Dämpfungseigenschaften der Bauelemente des Antriebsstrangs in Gänze (d.h. insbesondere im eingebauten Zustand) berücksichtigt werden.

Bei elektrischen Flugantrieben können mechanische Schwingungen, insbesondere Vibrationen im Antriebsstrang, eine Gefahr im Betrieb darstellen. Auch können mechanische Schwingungen zu einer Verringerung der Lebensdauer des Antriebsstranges und / oder damit verbundener Bauteile führen, wenn diese z.B. den mechanischen Belastungen mit bestimmten Frequenzen über einen bestimmten Zeitraum ausgesetzt sind. Besondere Gefahr besteht dann, wenn eine Erregerfrequenz des Antriebsstranges mit einer Eigenfrequenz des Antriebsstrangs übereinstimmt oder in deren Nähe liegt.

Des Weiteren ist das Auftreten und / oder auch die zeitliche Veränderung des Torsionsschwingungsverhaltens ein Indikator für die Funktion und / oder den Zustand des Antriebsstrangs und / oder damit verbundener Bauelement. So kann z.B. die Änderung einer Eigenfrequenz des Antriebsstrangs auf einen Schaden in einem Bauelement (z.B. einer Welle oder einem Lager) oder einer räumlichen Verschiebung eines Bauelements hinweisen. Daher ist es auch wünschenswert, z.B. das Torsionsschwingungsverhalten vor jedem Flug zu erfassen und zu speichern, um dann über längere Zeiträume Trendaussagen über den Zustand des Antriebsstrangs im Rahmen eines Engine Health Managements zu ermöglichen.

Ein Testsystem für elektrische Antriebe ist z.B. aus der EP 4 250 027 A1 bekannt.

Grundsätzlich werden Verfahren und Vorrichtungen benötigt, die einfach und effizient das Torsionsschwingungsverhalten eines Antriebsstrangs erfassen und / oder auswerten können.

Gemäß einem ersten Aspekt wird ein Verfahren mit den Merkmalen des Anspruchs 1 bereitgestellt.

Dabei wird von einem Antriebsstrang ausgegangen, der mit einem Permanentmagnet-Synchronmotor als Antrieb gekoppelt ist. Dies kann z.B. ein elektrischer Antrieb in einem elektrischen Flugzeug sein oder ein elektrischer Antrieb, der mit einem Verbrennungsflugzeugtriebwerk (z.B. als Anlasser, als seriell- oder parallelhybrider Antriebsstrang oder als Starter-Generator) gekoppelt ist.

In dem Verfahren wird im Betrieb, d.h. bei laufendem elektrischem Antrieb, mindestens ein Kurzschluss, insbesondere mindestens ein 2-Phasen und / oder mindestens ein symmetrischer 3-Phasen-Kurzschluss im oder am Permanentmagnet-Synchronmotor erzeugt, der eine mechanische Anregung (d.h. eine Torsionsanregung) des Antriebsstrangs induziert. Da die Anregung über die antreibende Welle erfolgt, werden je nach der Form und / oder der Dauer der induzierten mechanischen Anregung Drehschwingungen im Antriebsstrang angeregt.

Auch wenn ein symmetrischer 3-Phasen-Kurzschluss betriebsmäßige Vorteile haben mag, ist es grundsätzlich möglich, mechanische Anregungen des Antriebstranges auch mit anderen Formen von Kurzschlüssen zu erreichen, insbesondere mit einem 2-Phasen-Kurzschluss. Auch dabei wird eine Anregung, z.B. in Form eines Impulses auf den Antriebstrang gegeben. Die Anregung wäre dann asymmetrisch, und ggf. höher als bei einem symmetrischen Kurzschluss. Es ist grundsätzlich auch möglich, dass mehrere, unterschiedliche Kurzschlüsse zur mechanischen Anregung des Antriebsstrangs erzeugt werden.

Die entsprechende Torsionsschwingungsantwort des Antriebsstrangs auf die induzierte mechanische Anregung wird dann von einer Sensorvorrichtung erfasst, insbesondere in Hinblick auf die Ermittlung mindestens einer Eigenfrequenz und / oder einer Resonanzfrequenz des Antriebstrangs. Dabei kann insbesondere die Torsionsschwingungsantwort beim Austrudeln des Antriebsstrangs nach der Auslösung des Kurzschlusses von der Sensorvorrichtung erfasst werden. Das Austrudeln des Antriebsstrangs kann dabei insbesondere lastfrei erfolgen, d.h. es würden u.U. noch Bremsmomente auf Grund der Aerodynamik, Reibung oder Leerlaufverlusten in der elektrischen Maschine vorliegen.

Mit einem solchen Verfahren ist es z.B. möglich, in-situ (d.h. im Betrieb, also ohne Verwendung einer speziellen Testvorrichtung) effizient Aussagen über das Torsionsschwingungsverhaltens zu erhalten, wenn der Flugzeugantrieb von einer hohen Drehzahl ausgehend austrudelt, was im Englischen auch als coasting down bezeichnet wird. Ein solche Vorgehen ist besonders gut geeignet für Flugzeugantriebe, da diese eine inhärent hohe Rotationsträgheit aufweisen und damit gutes inhärentes Testbed für die schwingungsmechanische Untersuchung des Antriebsstrang sind.

Des Weiteren eignet sich das Vorgehen insbesondere für Luftfahrtantriebe, da diese häufig kurzschlusstolerant sind, so dass die Belastung ertragbar ist. Dies ist bei anderen Anwendungen (z.B. Automotiv) oft nicht gefordert. Die hier eingesetzten induzierten mechanischen Anregungen führen im Übrigen nicht zu einer Schädigung des Antriebsstranges, da die Torsionsschwingungsantwort von der Amplitude und der Dauer her den Antriebsstrang nicht übermäßig beanspruchen.

Mit einem solchen Verfahren ist auch eine besonders einfache Prüfung des Drehschwingungsverhaltens des Antriebsstrangs möglich, ohne dass aufwändige Regler oder Schaltungen notwendig sind. Wie noch beschrieben wird, können ohnehin vorhandene Leistungselektronikschaltungen verwendet werden, um den mindestens einen Kurzschluss, insbesondere den mindestens einen 2-Phasen- und / oder den mindestens einen symmetrischen 3-Phasenkurzschluss - und damit die induzierte mechanische Anregung - in einer vorhersagbaren und reproduzierbaren Weise zu erzeugen. Diese Art der Überprüfung kann insbesondere regelmäßig, z.B. im Rahmen eines Pre-Flight Checks, durchgeführt werden.

In einer Ausführungsform des Verfahrens ist die induzierte mechanische Anregung des Antriebsstrangs als Stroß, als Impuls, als Schrittfunktion und / oder als Rampe, insbesondere eine steile Rampe, ausgebildet. Diese Arten von mechanischen Anregungen des Antriebsstrangs sind effizient mit Hilfe eines Kurzschlusses, insbesondere mit dem 2-Phasen- und / oder dem symmetrischen 3-Phasen-Kuzschlusses zu erzeugen und regen den Antriebsstrang bei vielen Frequenzen an, so dass die entsprechende Torsionsschwingungsantwort Aussagen über die mechanischen Eigenschaften des Antriebsstrangs erlaubt. Dabei können die induzierten mechanischen Anregungen in einer einmaligen Anregung bestehen oder auch als Folge von periodischen induzierten mechanischen Anregungen des Antriebsstrangs. So können z.B. mehrere induzierte mechanische Anregungen, insbesondere eine Reihe von Impulsen in einem bestimmten Abstand, beim Austrudeln auf den Antriebsstrang aufgebracht werden, wobei diese mechanischen Anregungen auf eine vorbestimmte Frequenz des Antriebsstrangs abgestimmt sind.

Ferner ist es möglich, dass der mindestens Kurzschluss, insbesondere der 2-Phasen-Kurzschluss und / oder der symmetrische 3-Phasen-Kurzschluss bei einer relativ hohen Drehzahl des Antriebsstrangs erzeugt wird, wobei die Auslösung in einem Drehzahlbereich ohne Resonanzfrequenz erfolgt, wobei der Antriebsstrang insbesondere lastfrei ist. Das wäre eine Option, um das mechanische System nicht übermäßig zu belasten. Eine Anregung in der Resonanz ist grundsätzlich auch möglich.

Die Erfassung des Torsionsschwingungsverhaltens durch die Sensorvorrichtung kann dabei auf unterschiedliche Weise erfolgen. So kann z.B. der Drehmomentenverlauf als Reaktion auf die induzierte mechanische Anregung erfasst werden. Die z.B. abklingende Fluktuation im Drehmomentenverlauf charakterisiert auch das Torsionsschwingungsverhalten des Abtriebsstrangs. Zusätzlich oder alternativ kann auch eine Winkelgröße am Abtriebsstrang gemessen werden. Die Winkelgröße kann z.B. ein Winkel, eine Winkelgeschwindigkeit oder eine Winkelbeschleunigung sein. Grundsätzlich können eine gemessene Größe oder auch mehrere gemessene Größen gemeinsam zur Charakterisierung des Torsionsschwingungsverhaltens verwendet werden.

Diese Erfassung bezieht sich auf Messgrößen im Zeitbereich. So kann z.B. das Abklingverhalten der Torsionsschwingungsantwort insbesondere über das logarithmische Dekrement bestimmt werden.

Es ist zusätzlich oder auch alternativ möglich, dass die Sensorvorrichtung die Torsionsschwingungsantwort im Frequenzbereich insbesondere mittels einer Kurzzeit-Fouriertransformation und / oder eine Wavelet-Transformation zur Erfassung von Eigenfrequenzen und / oder Resonanzfrequenzen auswertet.

Zur Verbesserung der Aussagekraft der Analyse kann in einer Ausführungsform des Verfahrens die Torsionsschwingungsantwort durch ein Hochpassfilter und / oder ein Bandpassfilter der Sensorvorrichtung gefiltert werden.

Das Verfahren ist aber nicht nur zur Gewinnung von aktuellen Daten über das Torsionsschwingungsverhalten geeignet. Es ist in einer Ausführungsform auch möglich, dass die Sensorvorrichtung mit einem Mittel zur Speicherung und / oder Auswertung der Torsionsschwingungsantwort über längere Zeiträume, insbesondere eines Engine Health Monitoring Systems gekoppelt ist. Im Rahmen des Engine Health Monitorings werden z.B. Vergleiche mit historischen Daten oder Flottendaten durchgeführt, um Aussagen über z.B. sich verschlechternde Bauteileigenschaften zu gewinnen.

Bei der Erfassung des Torsionsschwingungsverhaltens - sei es im Rahmen einer aktuellen Datenerfassung oder auch im Rahmen des Engine Health Monitorings - können bestimmte Bedingungen definiert werden, die eine Aktion auslösen. Dies kann z.B. die Reduktion einer Drehzahl sein, das Abschalten eines Antriebs oder auch die Einleitung einer Wartungsprozedur. In jedem Fall gibt in solchen Fällen die Sensorvorrichtung in Abhängigkeit vom Torsionsschwingungsverhalten ein Signal ab, das eine solche Aktion auslösen kann.

In einer Ausführungsform des Verfahrens erfolgt die mechanische Anregung über eine mit dem Antriebsstrang gekoppelte, insbesondere eingebaute Vorrichtung, die im Bodenbetrieb nutzbar ist, um Fehlfunktionen im Flugbetrieb auszuschließen.

Auch ist es möglich, dass der mindestens eine Kurzschluss, insbesondere der mindestens eine 2-Phasen-Kurzschluss und / oder der symmetrische 3-Phasen-Kurzschluss nach der Einleitung mindestens über einen Teil, insbesondere die gesamte Austrudeldauer des Antriebsstrangs aufrechterhalten bleibt. Hier sind verschiedene Implementationen möglich, um insbesondere beim Austrudeln bestimmte Anregungen zu erzeugen.

Es ist ferner möglich, dass die mechanische Anregung periodisch erfolgt, wobei insbesondere mindestens ein bekanntes Resonanzband des Antriebsstrangs durch die periodische Anregung ausgespart wird. Sofern das System z.B. vom vorhergehenden Anregungen (Impulsen) noch angeregt ist, sollte bei Resonanzdurchfahrt auch eine Amplitudenerhöhung messbar werden. Diese stellte eine besonders schonende Variante dar.

Die Aufgabe wird auch durch eine Vorrichtung mit den Merkmalen des Anspruchs 17 gelöst.

Eine solche Vorrichtung zur Erfassung des Torsionsschwingungsverhaltens eines Antriebsstranges eines Luftfahrzeugs, insbesondere eines Flugzeugs, weist einen Antriebsstrang auf, der mit einem Permanentmagnet-Synchronmotor als Antrieb gekoppelt ist. Dabei dient ein Mittel zur Erzeugung mindestens Kurzschlusses, insbesondere mindestens eines 2-Phasen-Kurzschlussses und / oder mindestens eines symmetrischen 3-Phasen-Kurzschlusses in dem Permanentmagnet-Synchronmotor zur Aufbringung mindestens einer induzierten mechanischen Anregung des Antriebsstrangs. Eine Sensorvorrichtung dient dann zur Erfassung der entsprechenden Torsionsschwingungsantwort des Antriebsstrangs auf die induzierte mechanische Anregung des Antriebsstrangs, insbesondere zur Ermittlung mindestens einer Eigenfrequenz des Antriebstrangs und insbesondere bei einem lastfreien Antriebsstrang, d.h. beim Austrudeln nach dem Aufbringen des mindestens einen Kurzschlusses, insbesondere des mindestens einen 2-Phasen-Kurzschlusses und / oder des mindestens einen symmetrischen 3-Phasen-Kurzsschlusses.

Dabei kann das Mittel zur Erzeugung des mindestens einen Kurzschlusses, insbesondere des mindestens einen 2-Phasen-Kurzschlusses und / oder des mindestens einen symmetrischen 3-Phasen-Kurzschlusses in dem Permanentmagnet-Synchronmotor als Wechselrichterschaltung ausgebildet sein, insbesondere als eine zweistufige Wechselrichterschaltung.

Alternativ kann das Mittel zur Erzeugung des mindestens einen Kurzschlusses, insbesondere des mindestens einen 2-Phasen-Kurzschlusses und / oder des mindestens einen symmetrischen 3-Phasen-Kurzschlusses in dem Permanentmagnet-Synchronmotor eine Gleichrichterschaltung aufweisen, insbesondere eine Drehphasengleichrichterschaltung mit offenen Schaltern. Ferner kann der symmetrische 3-Phasen-Kurzschluss am Gleichstromteil ausgelöst werden, insbesondere an einer Transistorschaltung.

Solche Wechselrichterschaltungen oder Gleichrichterschaltungen sind in Verbindung mit Antrieben in Luftfahrzeugen häufig vorhanden, so dass diese in effizienter Weise zur Aufbringung der mindestens einen mechanischen Anregung der Antriebswelle verwendbar ist.

Ausführungsformen solcher Vorrichtungen können in Verbindung mit einem Luftfahrzeugantrieb eingesetzt werden. Der Luftfahrzeugantrieb kann dabei z.B. einen Propellerantrieb, einen Fan-Antrieb, einen Turbogenerator oder ein hybrides Antriebssystem aufweisen. So kann z.B. ein Abtriebsstrang eines hybriden Antriebssystems geprüft werden, ohne dass das Verbrennungssystem in Betrieb ist.

Die Ausführungsformen der Luftfahrzeugantriebe können beispielsweise in einem Flugzeug, einem Luftschiff oder einer Drohne angeordnet sein.

Für die Fachperson ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und / oder mit einem beliebigen anderen Merkmal oder Parameter, das bzw. der hier beschrieben wird, kombiniert werden, sofern sie sich nicht gegenseitig ausschließen.

Es werden nun beispielhaft Ausführungsformen mit Bezug auf die Figuren beschrieben; in den Figuren zeigen:
- Fig. 1: eine schematische Darstellung eines Antriebsstrangs in einem Flugzeug mit dem eine Ausführungsform eines Verfahrens zur Erfassung des Torsionsschwingungen durchführbar ist;
- Fig. 2: ein Flussdiagramm einer ersten Ausführungsform des Verfahrens;
- Fig. 3: eine beispielhafte Torsionsschwingungsantwort eines Antriebsstrangs im Zeitbereich;
- Fig. 4: die beispielhafte Torsionsschwingungsantwort des Antriebsstrangs gemäß Fig. 3 im Frequenzbereich;
- Fig. 5: eine Darstellung von Drehmomentenschwingungen bei einer Antriebswelle nach einer induzierten mechanischen Anregung durch einen symmetrischen 3-Phasen-Kurzschluss;
- Fig. 6: ein Spektrogramm von Drehmomentenschwingungen nach einer induzierten mechanischen Anregung durch einen symmetrischen 3-Phasen-Kurzschluss;
- Fig. 7: eine erste Ausführungsform eines Mittels zur Erzeugung eines symmetrischen 3-Phasen-Kurzschlusses unter Verwendung einer Schaltung eines Dreiphasengleichrichters;
- Fig. 8: eine zweite Ausführungsform eines Mittels zur Erzeugung eines symmetrischen 3-Phasen-Kurzschlusses unter Verwendung einer Schaltung eines
- Fig.: Wechselrichters; 9A-E Ausführungsformen von induzierten mechanischen Anregungen.

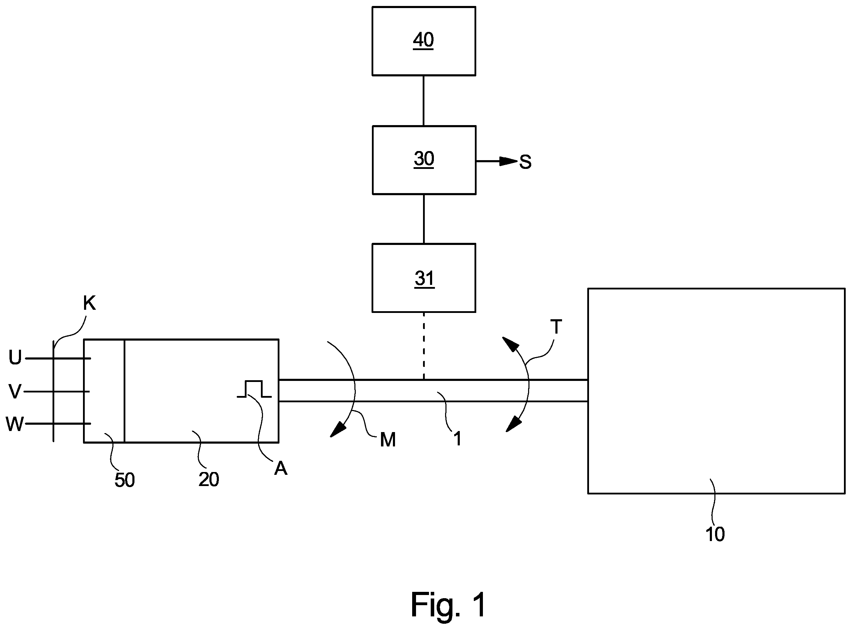

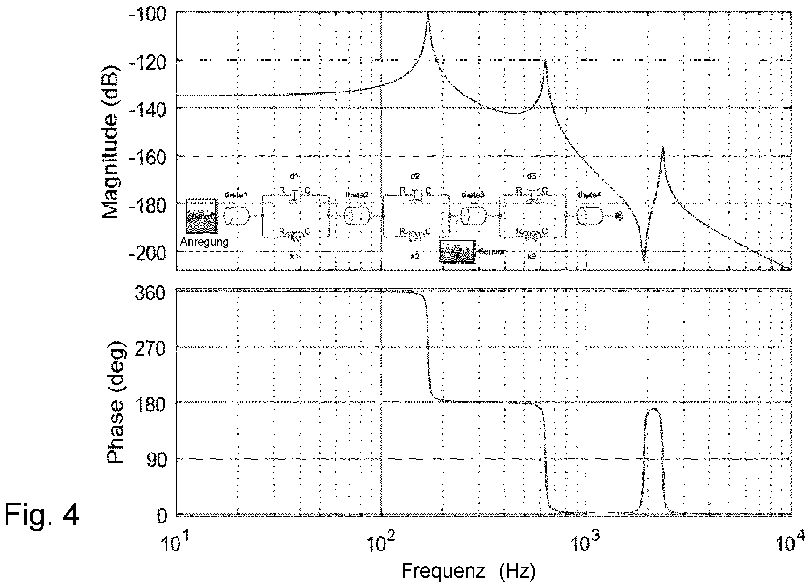

In der Figur 1 ist schematisch eine Vorrichtung zur Erfassung des Torsionsschwingungsverhaltens T eines Antriebsstranges 1 dargestellt. Der Antriebsstrang 1 ist in Fig. 1 vereinfachend als Rechteck dargestellt. Reale Ausführungen von Antriebssträngen weisen in der Regel eine Reihe von Wellenelementen und damit verbundenen Bauelementen auf, die in Rotation versetzbar sind. Unter einem Antriebsstrang wird hier die Gesamtheit der Bauelemente verstanden, die vom elektrischen Antrieb in Rotation versetzt werden, insbesondere auch einschließlich rotierender Teile des Antriebs selbst. Dies schließt z.B. Wellen, Wellenteile, angelenkte Wellen, Differentiale, Lager, Getriebe, Kupplungen, angeschlossene Arbeits- und Kraftmaschinen (z.B. Propeller, Rotoren, Fans, Kompressorstufen, Turbinenstufen) und / oder angetriebene Bauelemente ein. Eine mögliche Modellierung eines solchen Antriebsstrang ist in Fig. 4 schematisch dargestellt.

Der Antriebsstrang 1 wird von einem Permanentmagnet-Synchronmotor 20 angetrieben. Der Antriebsstrang 1 ist an seiner Abtriebsseite - in Fig. 1 rechts - mit einem Lastsystem 10 eines Luftfahrzeugs verbunden. Das Lastsystem 10 kann hier z.B. ein Propeller oder Fan eines Flugzeugs, oder der Propeller eines Luftschiffes oder einer Drohne sein. Ein Flugzeug, ein Luftschiff oder eine Drohne sind Beispiele für Luftfahrzeuge.

Diese genannten Lastsysteme 10 weisen ein - verglichen mit dem Permanentmagnet-Synchronmotor 20 - relativ hohes Rotationsträgheitsmoment auf. Es kann dabei sinnvoll sein, bei einem Test des Torsionsschwingungsverhaltens T, den Permanent-Synchronmotor 20 relativ schnell hochzufahren, um unerwünschte mechanische Anregungen zu vermeiden. Typische Rotationsträgheitsmomente eines elektrischen Antriebes zur Verwendung in der Luftfahrt liegen bei 0.05 kg*m². Bei einer Lastmaschine liegt das typische Rotationsträgheitsmoment bei 5 kg*m², deutlich höher. Ein Propeller kann z.B. ein Rotationsträgheitsmoment von 1.2 kg*m², ein Rotor ein Rotationsträgheitmoment von 5.5 bis 6.7 kg*m² aufweisen.

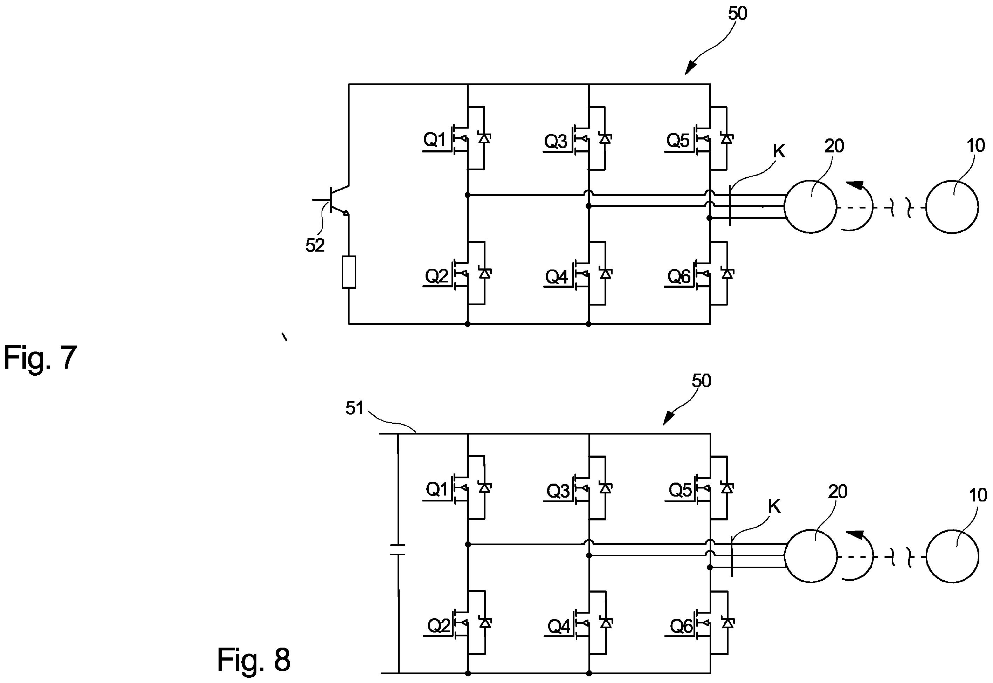

Der Permanentmagnet-Synchronmotor 20 ist mit einem Mittel 50 zur Erzeugung mindestens eines symmetrischen 3-Phasen-Kurzschlusses K gekoppelt. Ausführungsformen für dieses Mittel 50 werden im Zusammenhang mit den Fig. 7 und 8 näher beschrieben.

Unter einem symmetrischen 3-Phasen-Kurzschluss K wird hier der gleichzeitige Kurzschluss aller drei Leiter U, V, W des Permanentmagnet-Synchronmotors 20 verstanden, was auch als Stoßkurzschluss (wenn plötzlich im Betrieb eingeleitet) oder als dreipoliger Kurzschluss bezeichnet wird.

Wenn ein solcher symmetrischer 3-Phasen-Kurzschluss K bei einem im Betrieb befindlichen Permanent-Synchronmotor 20 erzeugt wird, induziert dies eine mechanischen Anregung A (z.B. in Form eines Stoßes) des Antriebsstrangs 1, der mechanisch ein Torsionsfeder-Drehmassen-System darstellt.

Grundsätzlich gibt es bei einem Permanentmagnet-Synchronmotor 20 mit einem Drehstromanschluss (in Fig. 1 durch die Leitungen U, V, W symbolisiert) mehrere Arten von Kurzschlüssen. So sind auch Einphasen-Kurzschlüsse K oder 2-Phasen-Kurzschlüsse K in der Lage, eine mechanische Anregung A des Antriebsstrangs 1 zu bewirken, wie ein 3-Phasen-Kurzschluss K zu erzeugen. In der Folge wird in der Regel, ohne dass dies einschränkend gemeint ist, der Fall eines 3-Phasen-Kurzschlusses dargestellt.

Die induzierte mechanische Anregung A ist in Fig. 1 beispielhaft und schematisch als impulsartiger Stoß A angegeben. Bei einem solchen Stoß A hinreichender Höhe und relativ kurzer Dauer können sehr viele Frequenzen des schwingungsfähigen Antriebsstrangs 1 angeregt werden.

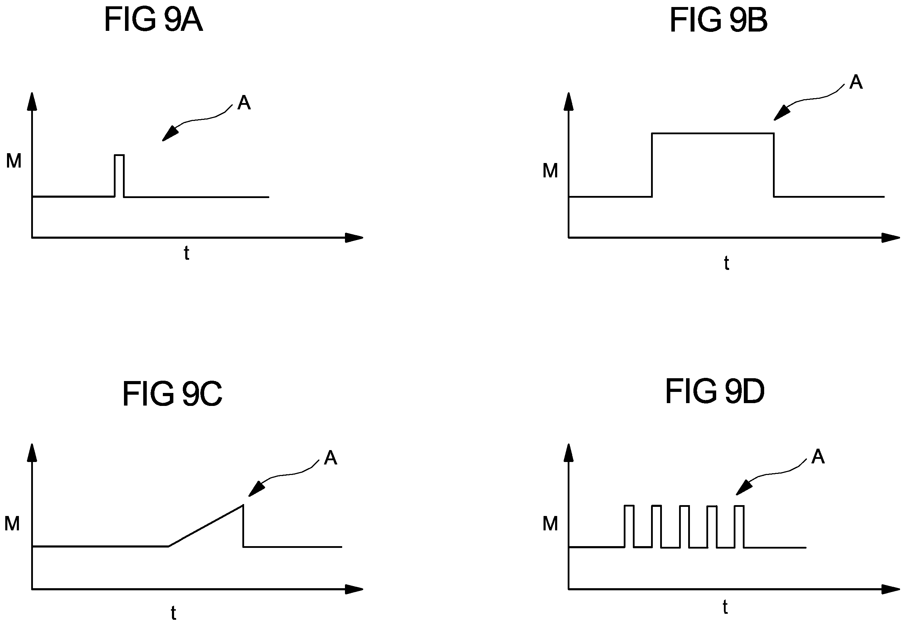

In Fig. 9A bis 9E werden unterschiedliche Formen von induzierten mechanischen Anregungen A beschrieben.

In jedem Fall führt die induzierte mechanische Anregung A zu einer Torsionsschwingungsantwort T des Antriebsstranges 1.

Mit einer Sensorvorrichtung 30 kann die Torsionsschwingungsantwort T des Antriebsstrangs 1 auf den symmetrischen 3-Phasen-Kurzschluss K, insbesondere zur Ermittlung mindestens einer Eigenfrequenz des Antriebstrangs erfasst werden. Die Sensorvorrichtung 30 verfügt z.B. über optische und / oder mechanische Sensoren, die das Torsionsschwingungsverhalten T an ein einer oder mehreren Stellen des Antriebstranges 1 überwachen. In der beispielhaften Ausführungsform gemäß Fig. 1 wird die Torsionsschwingungsantwort T noch über einen optionalen Hochpassfilter 31 gefiltert, bevor sie analysiert, insbesondere im Frequenzbereich, wird.

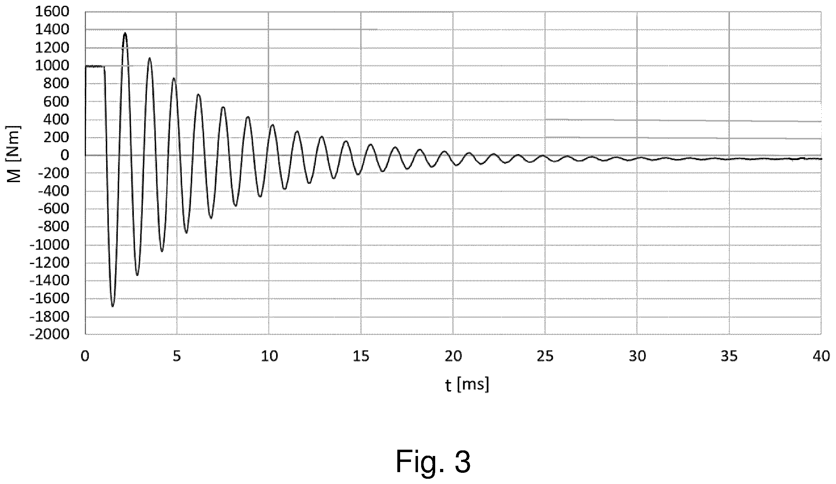

Die Fig. 3 zeigt beispielhaft eine Torsionsschwingungsantwort T im Zeitbereich (Simulationsergebnis), die noch diskutiert werden wird.

Wie im Folgenden ebenfalls noch beschrieben wird, können aus der Torsionsschwingungsantwort T Aussagen über das mechanische Verhalten des Abtriebsstrangs 1 gezogen werden. Auch kann die Sensorvorrichtung 30 ein Signal abgeben und / oder aufzeichnen, das repräsentativ für das Torsionsschwingungsverhalten T ist. Eine Aufzeichnung eines wiederkehrenden Signals kann z.B. im Rahmen eines Machine Learning Verfahren im Zusammenhang mit dem Engine Health Monitoring sein.

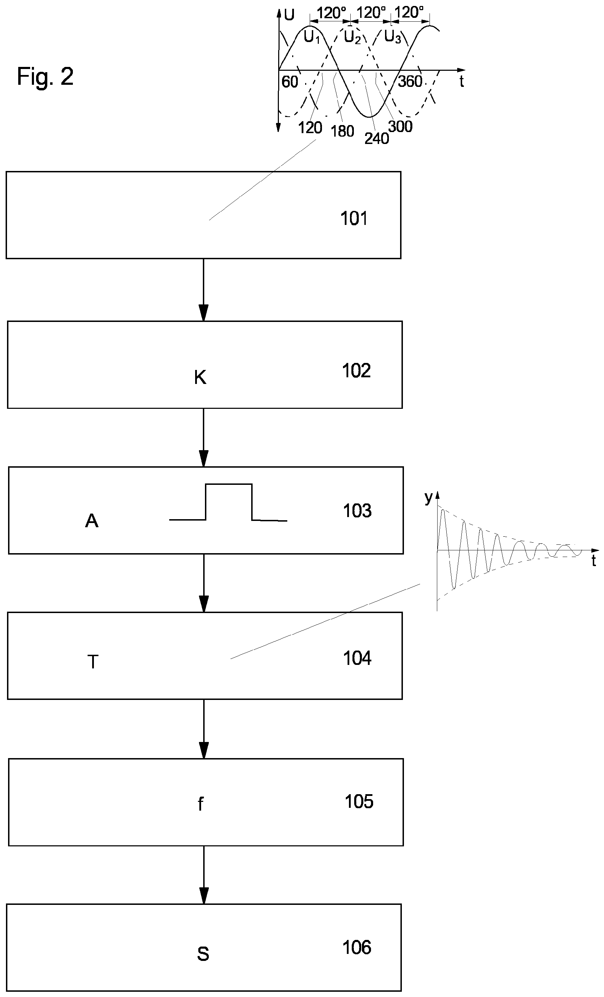

In der Fig. 2 ist beispielhaft eine erste Ausführungsform eines Verfahrens zur Erfassung des Torsionsschwingverhaltens T in einem Flussdiagramm dargestellt.

Ausgehend von einem ersten Schritt 101, einem Permanentmagnet-Synchronmotor 20 im Betrieb (Drehzahl hinreichend groß, außerhalb einer Resonanzdrehzahl), wird zu einem Zeitpunkt ein symmetrischer 3-Phasen-Kurzschluss K ausgelöst (Schritt 102). Bei typischen Drehzahlen liegt die Blattspitzenmachzahlen der Rotoren und Propeller zwischen 0.5 < Ma < 0.8. Fans drehen ggf. auch bis in den transonischen Bereich an den Blattspitzen.

Dieser symmetrische 3-Phasen-Kurzschluss K induziert (Schritt 103) eine mechanische Anregung A des Antriebstrangs 1, die eine Torsionsschwingungsantwort T im Antriebsstrang 1 hervorruft (Schritt 104).

Diese Torsionsschwingungsantwort T des Antriebsstrangs 1 wird dann z.B. beim Austrudeln (coasting) von der Sensorvorrichtung 30 erfasst und ausgewertet (Schritt 105), um z.B. eine Eigenfrequenz f des Antriebsstrangs 1 zu ermitteln.

Wenn Abweichungen der Eigenfrequenz f von einem nominellen Wert ermittelt werden, kann das z.B. ein Signal S auslösen (Schritt 106). Das Signal S kann z.B. eine Anzeige für einen Piloten sein, dass der Antriebsstrang 1 nicht nominell arbeitet. Das Signal S kann aber z.B. auch als ein automatisches Signal S ausgebildet sein, das bei Überschreiten bestimmter Grenzwerte zu einer Abschaltung der Einheit führt, zu einer Reduktion der Drehzahl oder der Beschränkung auf gewisse Drehzahlbereiche.

Die Sensorvorrichtung 30 kann die Signale S auch über eine längere Zeit im Rahmen eines Engine Health Managements aufzeichnen, um z.B. Trends in der Entwicklung einer oder mehrerer Eigenfrequenzen f zu erfassen.

Da ein symmetrischer 3-Phasen-Kurzschluss K in der beschriebenen Weise im Betrieb des Permanentmagnet-Synchronmotors 20 gezielt erzeugbar ist, ist dies ein effizientes und einstellbares Mittel, um gezielt eine mechanische Belastung auf den Antriebsstrang 1 zu bringen, um dann die Torsionsschwingungsantwort T des Antriebsstrangs 1 zu ermitteln.

Grundsätzlich können auch in zeitlicher Folge mehrere solcher symmetrischen 3-Phasen-Kurzschlüsse K auf den Antriebsstrang 1 aufgebracht werden, so dass komplexe, dynamische Belastungsmuster in dem Antriebsstrang 1 erzeugt werden können (siehe Fig 9A - 9E).

In der Fig. 3 ist ein Simulationsergebnis eines Systems (siehe Darstellung des verwendeten Ersatzschwingersystems in Fig. 4) mit einem Permanentmagnet-Synchronmotor 20 und mit einem damit gekoppelten Antriebsstrang 1 dargestellt.

Zum Zeitpunkt t=1,066 ms wird bei konstanter Drehzahl des Permanentmagnet-Synchronmotors 20 ein symmetrischer 3-Phasen-Kurzschluss K angelegt. Am Antriebsstrang 1 misst die Sensorvorrichtung 20 das anliegende Drehmoment M, das mit einer Periode von etwas mehr als 1 ms (ca. 1 kHz) schwingt. Ausgehend von einem Drehmoment von 1000 Nm schwingt sich das Drehmoment M auf über -1600 Nm in der entgegengesetzten Drehrichtung auf. Es schwingt dann wieder zurück auf knapp 1400 Nm. Die einsetzende Torsionsschwingung T ist offensichtlich eine gedämpfte Schwingung, die nach 40 ms einen Wert von -40 Nm erreicht hat. Dies bedeutet, dass das Drehmoment M betragsmäßig innerhalb von 40 ms auf 4% des Ausgangswertes abgefallen ist. Mit einer induzierten mechanischen Anregung A, die diesen Drehmomentenverlauf hervorruft, wird eine breitbandige Anregung des Antriebsstrangs 1 bis in den Kilohertz-Bereich oder sogar in den Bereich von mehreren 10 kHz ermöglicht.

In der dargestellten Ausführungsform erfasst die Sensorvorrichtung 30 das Drehmoment M. In alternativen Ausführungsformen kann alternativ oder zusätzlich auch eine Winkelgröße erfasst werden. Die Winkelgröße kann z.B. der Drehwinkel des Antriebsstrangs 1 um die Rotationsachse sein, wobei der Drehwinkel nach der induzierten mechanischen Anregung A ein ähnliches gedämpftes Torsionsschwingungsverhalten T, wie das Drehmoment M zeigt. Die Winkelgröße kann aber auch eine vom Drehwinkel abgeleitete Größe, wie die Drehgeschwindigkeit oder die Drehbeschleunigung sein. Entsprechend ist die Fig. 3 auch für solche Messungen repräsentativ.

Die Sensorvorrichtung 30 kann aus den Daten des Torsionsschwingverhaltens T des Zeitbereichs, wie in Fig. 3 beispielhaft dargestellt, Aussagen über den mechanischen Zustand des Antriebsstrangs 1 machen. So können z.B. zeitliche Änderungen im Amplitudenverhalten (z.B. Abklingverhalten, logarithmisches Dekrement etc.) und / oder der Frequenz mit gespeicherten Daten für nominelle Betriebszustände verglichen werden.

Die induzierte mechanische Anregung A kann so eingestellt werden, dass die Änderung des Drehmoments M maximal 50% des anliegenden oder nominellen Drehmoments M beträgt. Wenn man z.B. von einem Nominaldrehmoment 1500 Nm ausgeht, dann wäre Stoßkurzschluss mit einer resultierenden Drehmomententendifferenz von 500 Nm oder weniger auf Dauer mechanisch weniger belastend für den Antriebsstrang 1 sein. Grundsätzlich wäre zu beachten, dass das Ermüdungsfestigkeitsbudget (Fatigue) des Antriebsstrangs 1 nicht übermäßig reduziert wird.

In der Fig. 4 ist der dynamische Verlauf des Torsionsschwingungsverhaltens T aus der Fig. 3 im Frequenzbereich in Form eines Bode-Diagramms dargestellt. Im oberen Teil der Fig. 4 (Magnitude) ist das bei der Simulation verwendete Ersatzschwingersystem für den als gekoppelten harmonischen Schwinger angenommenen Antriebsstrang 1 mit vier Massenträgheiten und drei Schwinger-Dämpfer-Systemen schematisch dargestellt. Dies ist lediglich beispielhaft zu verstehen. Wie im Zusammenhang mit den Fig.1 und 2 beschrieben, kann das Verfahren mit einem realen System durchgeführt werden, so dass es grundsätzlich keines Ersatzschwingersystems bedarf.

Das Bode-Diagramm zeigt für das Beispielsystem der Fig. 3 und 4 Eigenfrequenzen bei ca. 180 Hz, bei 800 Hz und bei 2 kHz.

Dies zeigt, dass mit einer Beaufschlagung des Antriebsstrangs 1 mit einer induzierten mechanischen Anregung A durch einen symmetrischen 3-Phasen-Kurzsschluss K effizient Eigenfrequenzen zu ermitteln sind.

Mit einer Fourier-Analyse (insbesondere einer Kurzzeit-Fourier-Analyse) der gemessenen Torsionsschwingungen T können charakteristische Frequenzen von der Sensorvorrichtung 30 ermittelt werden.

Grundsätzlich kann es sinnvoll sein, die Torsionsschwingungsantwort T mit einem Hochpassfilter 31 zu filtern, um tiefere Frequenzen vor der Analyse durch die Sensorvorrichtung 30 zu entfernen.

Wie oben beschrieben, ist es möglich, die von der Sensorvorrichtung 30 erfassten Daten der Torsionsschwingungsantwort T sofort zu verwerten, um z.B. eine Fehlerfunktion anzuzeigen oder die Daten zu speichern, einer Auswertung, insbesondere einer statistischen Auswertung, zu unterziehen. Diese Auswertung kann, insbesondere im Rahmen eines Engine Health Managements im Zeit- und / oder im Frequenzbereich erfolgen.

So kann z.B. eine Veränderung im Frequenz- und Abklingverhalten der Torsionsschwingungsantwort T auf ein mechanisches Problem im Antriebsstrang 1 hindeuten. Ein aktuell gemessenes Abklingverhalten kann mit historischen Daten desselben Antriebs und / oder auch mit anderen, eventuell baugleichen Antrieben verglichen werden. Bei einer bestimmten Abweichung von einem als nominell eingestuften Verhalten, kann ein entsprechendes Signal S abgegeben werden.

In analoger Weise kann auch mit den Torsionsschwingungsdaten T im Frequenzbereich verfahren werden, indem z.B. Eigenfrequenzen mit gespeicherten Eigenfrequenzen verglichen werden.

Die Auswertung kann natürlich auch mit Daten im Zeit- und Frequenzbereich zusammen erfolgen.

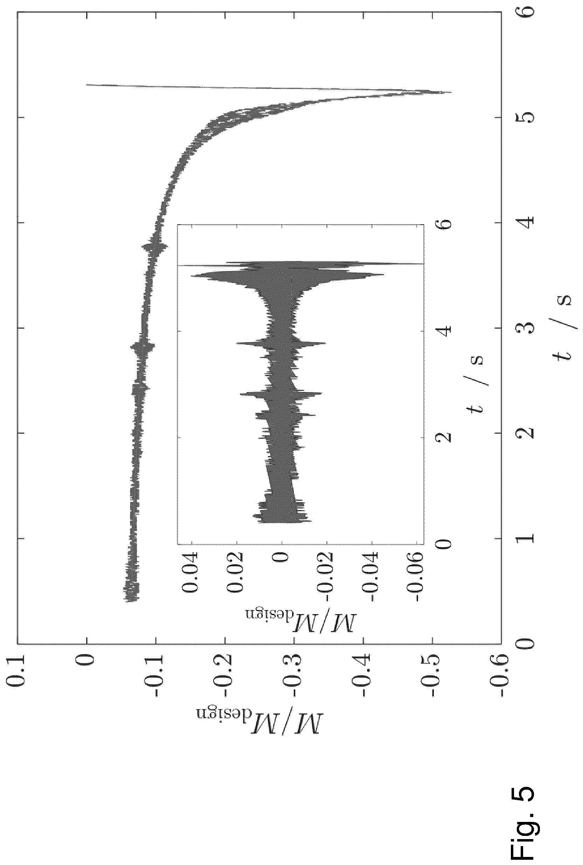

Die Fig. 5 zeigt eine Darstellung eines gemessenen Drehmoments M, normiert im Verhältnis zum nominellen Drehmoment M_{Design} in Abhängigkeit von der Zeit. Zum Zeitpunkt 0,5 s wurde bei einem System, vergleichbar dem in der Fig. 1 dargestellten, ein symmetrischer 3-Phasen-Kurzschluss K ausgelöst. Anschließend ist der Trend erkennbar, dass das normierte Drehmoment D im Laufe von ca. 4 s leicht abfällt, sich dann aber verstärkt. Im Ganzen liegt ein exponentiell abfallender Prozess der Form 1-a e^{bx} vor. Bei dem dargestellten Austrudeln liegt der symmetrische 3-Phasen-Kurzschluss K kontinuierlich an. Grundsätzlich können aber auch andere mechanische Anregungen - mit entsprechend anderen Schwingungsantworten - verwendet werden. Kann nach dem Anlegen des Kurzschlusses das Austrudeln auch mit offenen Klemmen (offenen Schaltern) erfolgen.

Wenn man die Daten mit einem IIR Filter filtert (durchgezogene glatte Linie in Fig. 5), liegt in etwa dieser Verlauf vor. Der kleine Graph in der Fig. 5 zeigt das hochpassgefilterte Signal.

Die ermittelten Daten zeigen jedoch keinen glatten Verlauf, sondern zeigen relativ hochfrequente Ausschläge, nämliche die Torsionsschwingungen T um diese Trendlinie herum. Es sind diese Torsionsschwingungen T, die von der Sensorvorrichtung 30 erfasst und ausgewertet werden.

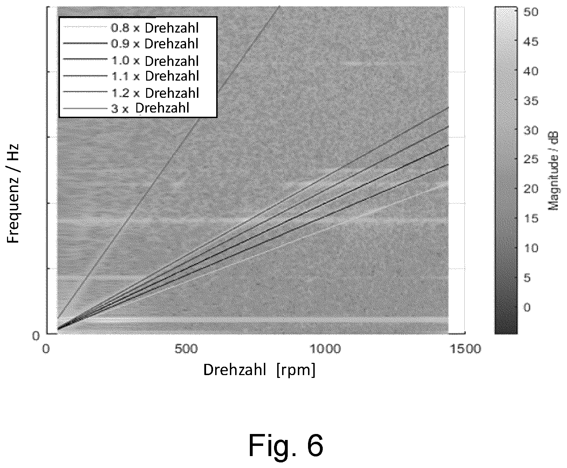

Fig. 6 zeigt ein Spektrogramm der Torsionsschwingungsantworten T beim Austrudeln des Antriebsstrangs 1 nach der mechanisch induzierten Anregung A mittels des symmetrischen 3-Phasen-Kurzschlusses in Abhängigkeit von der Drehzahl des Antriebsstrangs (x-Achse). Es ist erkennbar, dass bei ca. 100 und 800 Hz Eigenfrequenzen unabhängig von der Drehzahl vorliegen. Bei Drehzahlen bis ca. 300 U/min liegt eine Eigenfrequenz bei ca. 500 Hz vor, bei Drehzahlen oberhalb von 800 U/min liegen Eigenfrequenzen oberhalb von 1 kHz vor.

Die Masse-, Dämpfungs- und Steifigkeitseigenschaften des Antriebsstrangs 1 hängen von der Wellendrehzahl (x-Achse) ab. Daraus folgt, dass die bei einer Wellendrehzahl berechneten Eigenfrequenzen für diese Drehzahl eindeutig sein können. Aus diesem Grund ist es sinnvoll, ein Diagramm zu zeichnen, das die Variation (d. h. die absoluten Werte) der Eigenfrequenzen mit der Wellendrehzahl zeigt. Wenn ein solches Diagramm gezeichnet wird, ist es möglich, eine Anzahl von Linien darüberzulegen, die Variationen der Wellendrehzahl darstellen, siehe Legende in der Fig 6 oben links. Mit dieser als Campbell-Diagramm bezeichneten Darstellung ist es möglich, festzustellen, ob Schwingungsquellen (1x, 2x usw. Wellendrehzahl) mit den Eigenfrequenzen des Antriebsstrangs 1 zusammentreffen und dadurch Rotorresonanzen entstehen.

In den Fig. 7 und 8 werden beispielhaft zwei Leistungselektronik-Schaltungen dargestellt, mit denen jeweils effizient ein symmetrischer 3-Phasen-Kurzschluss K bei dem Permanentmagnet-Synchronmotor 20 ausgelöst werden kann.

In der Fig. 7 ist ein an sich bekannter 6-Pulsgleichrichter als eine Bauform eines aktiven Dreiphasengleichrichters dargestellt, bei dem alle MOSFET-Schalter Q1 bis Q6 offen sind. Wenn die Transistorschaltung 52 (hier eine IGBT-Schaltung: insulatedgate bipolar transistor) am Gleichstrom-Eingang (in Fig. 7 links) entsprechend geschaltet wird, kann ein symmetrischer 3-Phasen-Kurzsschluss K erzeugt werden.

Für den Kurschluss K müssen die Schalter Q1-Q6 im aktiven Gleichrichter auch leitend geschalten werden. Bei einem passiven Gleichrichter benötigt man den Schalter auf der Gleichstromseite. Wenn auf der Seite des Gleichrichter eine Batterie anschlossen ist, benötigt man zwei Schalter, um die Batterie vor der Durchführung des Verfahrens abzutrennen, da ansonsten die Batterie kurzgeschlossen würde.

Bei Luftfahrtantrieben werden häufig aktive Gleichrichter verwendet. Alternativ wären auch passive Gleichrichter verwendbar. Hier wären nur die Dioden in der Figur zu berücksichtigen. Die parallelen Schalter (Q1 bis Q6) wären dann nicht notwendig.

In Fig. 8 ist eine ebenfalls an sich bekannte 2-Level Wechselrichterschaltung dargestellt, bei der entweder die drei oberen Schalter Q1, Q3, Q5 oder die drei unteren Schalter Q2, Q4, Q6 eingeschaltet sind, um den symmetrischen 3-Phasen-Kurzschluss K zu erzeugen.

Diese beiden Schaltungsarten, Gleichrichter (Fig. 7) und Wechselrichter (Fig. 8), sind hier lediglich beispielhaft zu verstehen, da auch andere Schaltungen in der Lage sind, einen symmetrischen 3-Phasen-Kurzschluss K zu erzeugen.

Insbesondere können 2-Phasen-Kurzschlüssee K können über eine normale Inverterschaltung eingeleitet werden. Für Einphasenkurzschlüsse wird eine zusätzliche Einrichtung benötigt.

Bei der bisherigen Beschreibung wurden z.B. impulsartige induzierte mechanische Anregungen A (siehe Fig. 9A) oder schrittartige induzierte mechanische Anregungen A (siehe Fig. 9B) erwähnt. Mit diesen Formen der Anregung ist es möglich, sehr viele Frequenzen im Antriebsstrang 1 anzuregen. Außerdem sind diese Formen der induzierten mechanischen Anregung A mittels des symmetrischen 3-Phasen-Kurzschlusses K effizient zu erzeugen.

Grundsätzlich können aber auch andere mechanische Anregungen A induziert werden.

In Fig. 9C ist z.B. eine induzierte mechanische Anregung als Rampe dargestellt, dabei ist die Rampe mit einer Steilheit von 45° oder mehr als 45° ausgebildet, um eine spürbare Anregung der Antriebswelle 1 zu gewährleisten. So kann die Steilheit bei einer aktiven Stromrichterschaltung mit einer Pulsweitenmodulation erzeugt werden. Damit kann die mechanische Belastung bei der Einleitung des Kurzschlusses K gesteuert werden.

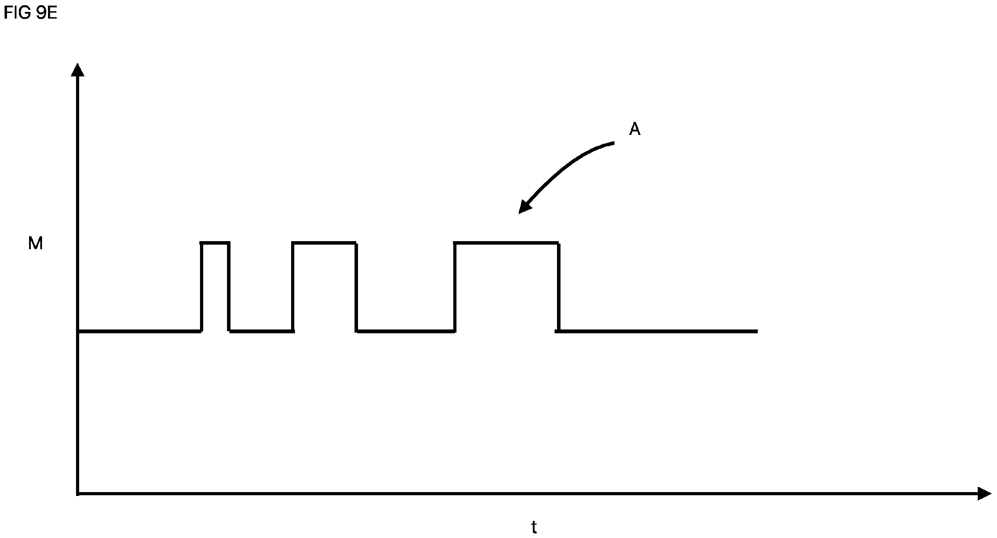

Es ist aber auch möglich, dass eine der in Fig. 9A bis 9C beschriebenen induzierten mechanischen Anregungen A periodisch erzeugt wird, so dass der Antriebsstrang 1 einer Reihe von mechanischen Anregungen erfährt. So können - wie in Fig. 9D und 9E dargestellt - mehrere induzierte mechanische Anregungen A, insbesondere Impulse oder rechteckförmige Anregungen A auf den Antriebsstrang 1 aufgebracht werden, wobei die Frequenz dieser mechanischen Anregungen A auf eine vorbestimmte Frequenz des Antriebsstrangs 1 abgestimmt ist.

In der Folge werden lediglich bespielhaft einige Werte angegeben, die typisch für Antriebe und Antriebsstränge sind, die in der Luftfahrt verwendet werden. Ein solcher Antrieb hat z.B. eine Leistung von ca. 200 kW und arbeitet nominell bei 1.300 U/min, was 21,7 Hz entspricht. Typische Drehzahlen sind dabei von 0 bis 2.500 U/min, also von 0 bis 42 Hz der Ausgangswelle.

Wenn man einmal von 30 Polpaaren des Antriebes ausgeht, ergibt dies eine elektrische Frequenz von 650 Hz bei der Nominaldrehzahl von 1.300 U/min. Der relevante Eigenfrequenzbereich kann dabei zwischen 10 und 5 kHz liegen. Wie ausgeführt, Diese beispielhaften Zahlen können z.B. den Größenordnungsbereich angeben, in dem Ausführungsformen des Verfahrens und der Vorrichtung arbeiten können.

Ausgehend von einem solchen Antrieb, könnten wiederholte mechanische Anregungen A auf den Antriebsstrang 1 aufgebracht werden. Beim kurzen wiederholten Anregungen A im Austrudeln geht es darum, bei verschiedenen Drehzahlen das Schwingungssystem anzuregen. Dabei könnte z.B. ein Impuls für Geschwindigkeitsschritte von 10 bis 50 U/min eingesetzt werden, um die Resonanzbänder hinreichend anzuregen.

Wie aus Fig. 3 zu erkennen ist, wird mit dem Beispielsystem bei der Nominaldrehzahl in ca. 0.5 ms eine Viertelperiode erreicht, was dem Erreichen einer Drehmomentamplitude entspricht (elektrische Frequenz ist gleich der Polpaarzahl mal der mechanischen Frequenz). Generell sollte eine Amplitude (Viertelperiode) oder weniger ausreichen, um eine hinreichend hohe Anregung (Puls) aufzubringen. Wichtig ist hierbei, dass der Puls in der richtigen Phasenlage eingebracht wird (gemäß der messbaren elektrischen Spannung vor dem Puls ist dies auch möglich). Kleinere Pulslängen führen zu einer niedrigeren mechanischen Belastung, sind aber ggf. ausreichend, um das Schwingungssystem anzuregen.

Für das periodische Anregen A bedeutet dies, dass man bei hohen Drehzahlen sehr kurze Pulse nutzen kann. Bei niedrigen Drehzahlen ist eine längere Anregung A notwendig, da die elektrische Frequenz proportional mit der Drehzahl abnimmt. Daher ist ggf. eine Anpassung der Pulsweite notwendig, was aber regelungstechnisch möglich ist.

In der Fig. 9E ist z.B. eine Anregung A dargestellt, bei der sich die die Periodendauer und die Pulslänge sich über die Zeit vergrößern.

Bezüglich der Austrudelzeit ist noch zu beachten, dass diese von der Drehträgheit und dem Bremsmoment des Systems abhängt und kurze Anregungen (Pulse) trotz des kurzzeitig hohen Drehmoments nur zu einer geringen Verzögerung führen.

Fig. 5 zeigt den Fall mit kontinuierlich anliegendem Kurzschluss, bei dem entsprechend kontinuierlich ein drehzahlabhängiges Bremsmoment anliegt. Daher ist der Vorgang nach ca. 5 s bereits beendet. Beim wiederholten kurzzeitigen Pulsen kann dieser Vorgang dementsprechend länger dauern.

Es kann sinnvoll sein, eine eingebaute Selbsttest-Regelung zu verwenden, die im Bodenbetrieb nutzbar ist, um Fehlfunktionen im Flugbetrieb auszuschließen.

Auch kann der mindestens eine Kurzschluss K, insbesondere der mindestens eine 2-Phasen-Kurzschluss und / oder der symmetrische 3-Phasen-Kurzschluss nach der Einleitung mindestens über einen Teil, insbesondere die gesamte Austrudeldauer des Antriebsstrangs 1 aufrechterhalten bleiben.

Die Drehzahl bei Luftfahrzeugen wird zumeist vom Schuberzeuger (Propeller, Rotor oder Fan) bestimmt, da dessen Blattspitzengeschwindigkeit durch kompressible Strömungseffekte beschränkt ist. Die Drehzahl bei E-VTOLs liegen unter 2.000 U/min, bei Propellerflugzeugen liegt sie bei bis zu 3.000 U/min.

Zu beachten ist, dass das Ausführungsformen des Verfahrens und der Vorrichtung auch bei Getriebeantrieben eingesetzt werden können. Hier wird die Drehzahl der Ausgangswelle auf das oben beschriebene Maß reduziert. Die Drehzahl der elektrischen Maschine ist dadurch höher, oft höher bis zu 20.000 U/min. Dafür ist die Polpaarzahl der elektrischen Maschine geringer, so dass die elektrischen Frequenzen im Bereich unter 2000 Hz bleiben.

Zu beachten ist weiterhin, dass das Verfahren auch bei einem Generator eines seriell- oder parallelhybriden Antriebssystems verwendet werden kann. Hier liegen die Wellendrehzahlen oft höher bis zu 20.000 U/min, dafür ist die Polpaarzahl der elektrischen Maschine geringer, so dass die elektrischen Frequenzen im Bereich unter 2.000 Hz bleiben.

Es sei noch angemerkt, dass bei typischen Drehzahlen von Luftfahrzeugen liegt die Blattspitzenmachzahlen der Rotoren und Propeller zwischen 0.5 < Ma < 0.8. Fans drehen ggf. auch bis in den transonischen Bereich an den Blattspitzen.

Die Art der induzierten mechanischen Anregungen A müssen dabei nicht, wie in Fig. 9D dargestellt - gleichartig sein, es können auch unterschiedlich ausgebildete induzierte Anregungen A in einer Folge verwendet werden, wie die in Fig. 9E beispielhaft dargestellt ist.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Beliebige der Merkmale können separat oder in Kombination mit beliebigen anderen Merkmalen eingesetzt werden, sofern sie sich nicht gegenseitig ausschließen, und die Offenbarung dehnt sich auf alle Kombinationen und Unterkombinationen eines oder mehrerer Merkmale, die hier beschrieben werden, aus und umfasst diese.

### Bezugszeichenliste

- 1: Antriebsstrang

- 10: Lastsystem (Propeller, Fan)
- 20: Permanentmagnet-Synchronmotor
- 30: Sensorvorrichtung
- 31: Hochpassfilter
- 40: Mittel zur Speicherung und / oder Auswertung der Torsionsschwingungsantwort
- 50: Mittel zur Erzeugung mindestens eines symmetrischen 3-Phasen-Kurzschlusses
- 51: Inverterschaltung
- 52: Mittel zur Erzeugung eines Kurzschlusses im Gleichstromstromteil einer Wechselrichterschaltung

- 101: Permanentmagnet-Synchronmotor im Betrieb
- 102: Auslösung eines symmetrischen 3-Phasen-Kurzschlusses
- 103: Auslösung einer induzierten mechanischen Anregung des Antriebsstrangs
- 104: Erfassung / Auswertung Torsionsschwingungsverhalten im Antriebsstrang mit Sensorvorrichtung
- 105: Ermittlung Eigenfrequenz (optional)
- 106: Abgabe eines Signals in Abhängigkeit von Torsionsschwingungsverhalten (optional)

- A: induzierte mechanische Anregung durch symmetrischen 3-Phasen Kurzschluss
- f: Eigenfrequenz
- K: Kurzschluss, insbesondere symmetrischer 3-Phasen-Kurzschluss
- M: Drehmoment
- Q1-Q6: Schalter in Leistungselektronikschaltung
- T: Torsionsschwingungsverhalten, Torsionsschwingungsantwort
- U: erste Leitung Permanentmagnet-Synchronmotor
- V: zweite Leitung Permanentmagnet-Synchronmotor
- W: dritte Leitung Permanentmagnet-Synchronmotor

## Patentansprüche

1. Verfahren zur Erfassung des Torsionsschwingungsverhaltens (T) eines Antriebsstranges (1) eines Luftfahrzeugs, insbesondere eines Flugzeugs, wobei der Antriebsstrang (1) mit einem Permanentmagnet-Synchronmotor (20) als Antrieb gekoppelt ist,
**gekennzeichnet durch**
a) mindestens eine Auslösung eines Kurzschlusses (K), insbesondere mindestens eines 2-Phasen-Kurzschlusses (K) und / oder mindestens eines symmetrischen 3-Phasen-Kurzschlusses (K) bei dem im Betrieb (101) befindlichen Permanentmagnet-Synchronmotor (20) zur Aufbringung mindestens einer induzierten mechanischen Anregung (A) des Antriebsstrangs (1), wobei
b) die Torsionsschwingungsantwort (T) des Antriebsstrangs (1) auf die mindestens eine induzierte mechanische Anregung (A), insbesondere zur Ermittlung mindestens einer Eigenfrequenz (f) und / oder einer Resonanzfrequenz des Antriebstrangs (1) mit einer Sensorvorrichtung (30) erfasst wird, insbesondere bei einem Antriebsstrang (1) der im Wesentlichen frei von einer Drehmomentlast ist.

2. Verfahren nach Anspruch 1, **dadurch gekennzeichnet, dass** die mindestes eine induzierte mechanische Anregung (A) des Antriebsstrangs (1) als Stroß, als Impuls, als Schrittfunktion und / oder als Rampe, insbesondere eine steile Rampe, ausgebildet ist, wobei die mindestens eine induzierte mechanische Anregung (A) des Antriebsstrangs (1) insbesondere periodisch ausgebildet ist
und / oder dass mehrere induzierte mechanische Anregungen (A), insbesondere Impulse, beim Austrudeln auf den Antriebsstrang (1) aufgebracht werden, wobei diese mechanischen Anregungen (A) auf eine vorbestimmte Frequenz des Antriebsstrangs (1) abgestimmt sind.

3. Verfahren nach Anspruch 1 oder 2, **dadurch gekennzeichnet, dass** der mindestens eine Kurzschluss (K), insbesondere des mindestens einen 2-Phasen-Kurzschlusses (K) und / oder des mindestens einen symmetrischen 3-Phasen-Kurzschlusses (K) bei einer hohen Drehzahl des Antriebsstrangs (1) in einem Drehzahlbereich ohne Resonanzfrequenz erfolgt, wobei der Antriebsstrang (1) insbesondere lastfrei ist.

4. Verfahren nach mindestens einem der vorherigen Ansprüche, **dadurch gekennzeichnet, dass** die Torsionsschwingungsantwort (T) von der Sensorvorrichtung (30) über eine Messung mindestens eines Drehmoments (M) und / oder mindestens einer Winkelgröße (φ) erfasst wird, wobei die Winkelgröße (φ) insbesondere ein Winkel, eine Winkelgeschwindigkeit oder eine Winkelbeschleunigung ist.

5. Verfahren nach mindestens einem der vorhergehenden Ansprüche, **dadurch gekennzeichnet, dass** die Sensorvorrichtung (30) die Torsionsschwingungsantwort (T) im Zeitbereich auswertet, wobei insbesondere das Abklingverhalten, ganz insbesondere das logarithmische Dekrement der Torsionsschwingungsantwort (T), bestimmt wird.

6. Verfahren nach mindestens einer der vorhergehenden Ansprüche, **dadurch gekennzeichnet, dass** die Sensorvorrichtung (30) die Torsionsschwingungsantwort (T) im Frequenzbereich, insbesondere mittels einer Kurzzeit-Fouriertransformation und / oder einer Wavelet-Transformation zur Erfassung von Eigenfrequenzen (f) und / oder Resonanzfrequenzen auswertet
und / oder die Torsionsschwingungsantwort (T) durch ein Hochpassfilter (31) und / oder ein Bandpassfilter gefiltert wird.

7. Verfahren nach mindestens einem der vorhergehenden Ansprüche, **dadurch gekennzeichnet, dass** die Sensorvorrichtung (30) mit einem Mittel (40) zur Speicherung und / oder Auswertung der Torsionsschwingungsantwort (T) über längere Zeiträume, insbesondere eines Engine Health Monitoring, gekoppelt ist
und / oder die Sensorvorrichtung (30) in Abhängigkeit vom Torsionsschwingungsverhalten (T) ein Signal (S) abgibt.

8. Verfahren nach mindestens einem der vorhergehenden Ansprüche, **dadurch gekennzeichnet, dass** die mindestens eine mechanische Anregung (A) über eine mit dem Antriebsstrang (1) gekoppelte, insbesondere eingebaute Vorrichtung erfolgt, die im Bodenbetrieb nutzbar ist.

9. Verfahren nach mindestens einem der vorhergehenden Ansprüche, **dadurch gekennzeichnet, dass** der mindestens eine Kurzschluss (K), insbesondere der mindestens eine 2-Phasen-Kurzschluss (K) und / oder der mindestens eine symmetrische 3-Phasen-Kurzschluss (K) nach der Einleitung mindestens über einen Teil, insbesondere die gesamte Austrudeldauer des Antriebsstrangs (1) aufrechterhalten bleibt.

10. Verfahren nach mindestens einem der vorhergehenden Ansprüche, **dadurch gekennzeichnet, dass** die mindestens eine mechanische Anregung (A) periodisch erfolgt, wobei insbesondere mindestens ein bekanntes Resonanzband des Antriebsstrangs (1) durch die periodische Anregung ausgespart wird.

11. Vorrichtung zur Erfassung des Torsionsschwingungsverhaltens (T) eines Antriebsstranges (1) eines Luftfahrzeugs, insbesondere eines Flugzeugs, wobei der Antriebsstrang (1) mit einem Permanentmagnet-Synchronmotor (20) als Antrieb gekoppelt ist,
**gekennzeichnet durch**
ein Mittel (50) zur Erzeugung mindestens eines Kurzschlusses, insbesondere mindestens eines 2-Phasen-Kurzschlusses (K) und / oder mindestens eines symmetrischen 3-Phasen-Kurzschlusses (K) in dem Permanentmagnet-Synchronmotor (20) zur Aufbringung mindestens einer induzierten mechanischen Anregung (A) des Antriebsstrangs (1) und
einer Sensorvorrichtung (30) zur Erfassung der Torsionsschwingungsantwort (T) des Antriebsstrangs (1) auf die mindestens eine induzierte mechanische Anregung (A) des Antriebsstrangs (1), insbesondere zur Ermittlung mindestens einer Eigenfrequenz des Antriebstrangs (1) und insbesondere bei einem lastfreien Antriebsstrang (1).

12. Vorrichtung nach Anspruch 11, **dadurch gekennzeichnet, dass** das Mittel (50) zur Erzeugung des mindestens einen Kurzschlusses, insbesondere des mindestens einen 2-Phasen-Kurzschlusses und / oder des mindestens einen symmetrischen 3-Phasen-Kurzschlusses (K) in dem Permanentmagnet-Synchronmotor (20) eine Wechselrichterschaltung (51), insbesondere eine zweistufige Wechselrichterschaltung (51) aufweist
oder dass das Mittel (50) zur Erzeugung des mindestens einen Kurzschlusses, insbesondere des mindestens einen 2-Phasen-Kurzschlusses und / oder des mindestens einen symmetrischen 3-Phasen-Kurzschlusses (K) in dem Permanentmagnet-Synchronmotor (20) eine Gleichrichterschaltung, insbesondere eine Drehphasengleichrichterschaltung mit offenen Schaltern (Q1-Q6) aufweist, wobei am Gleichstromteil insbesondere eine Transistorschaltung als Schalter angeordnet ist.

13. Vorrichtung nach Anspruch 11 oder 12, **dadurch gekennzeichnet, dass** die mindestens eine mechanische 2 (A) über eine mit dem Antriebsstrang (1) gekoppelte, insbesondere eingebaute Vorrichtung erfolgt, die im Bodenbetrieb nutzbar ist, um Fehlfunktionen im Flugbetrieb auszuschließen.

14. Luftfahrzeugantrieb mit mindestens einer Vorrichtung nach den Ansprüchen 11 bis 13, insbesondere mit einem Propellerantrieb, einem Fan-Antrieb, einem Turbogenerator oder einem hybriden Antriebssystem.

15. Luftfahrzeugantrieb nach Anspruch 14, **dadurch gekennzeichnet, dass** er in einem Flugzeug, einem Luftschiff oder einer Drohne angeordnet ist.
